# EUROPEAN PATENT SPECIFICATION

(11) **EP 1 300 491 B1**
(45) Date of publication and mention of the grant of the patent: **02.07.2008**
(21) Application number: 02256906.5
(22) Date of filing: 03.10.2002
(51) Int. Cl.: D01F 9/10, C04B 35/571, C04B 35/80

(54) **Process for the production of a silicon carbide fiber having boron nitride layer in fiber surface**
Verfahren zur Herstellung einer Siliciumcarbidfaser mit einer Bornitridschicht in der Faseroberfläche
Procédé pour la production de fibres en carbure de silicium ayant une couche de nitrure de bore

(30) Priority: 03.10.2001 JP 2001307112
(43) Date of publication of application: 09.04.2003
(73) Proprietor: Ube Industries, Ltd., Ube-shi, Yamaguchi-ken 755-8633 (JP)
(72) Inventor: Yamaoka, Hiroyuki, c/o Ube Laboratory of, Ube-shi, Yamaguchi-ken, 755-8633 (JP); Harada, Yoshikatu, c/o Ube Laboratory of, Ube-shi, Yamaguchi-ken, 755-8633 (JP); Fujii, Teruaki, c/o Ube Laboratory of, Ube-shi, Yamaguchi-ken, 755-8633 (JP)
(74) Representative: Woods, Geoffrey Corlett

(56) References cited:
- US-A- 4 642 271
- US-A- 5 792 416
- US-A- 6 040 008
- PATENT ABSTRACTS OF JAPAN vol. 1997, no. 06, 30 June 1997 (1997-06-30) & JP 09 031756 A (UBE IND LTD), 4 February 1997 (1997-02-04)

## Description

### Field of the Invention

The present invention relates to a process for preparing a silicon carbide fiber having boron nitride having function as an interface for a ceramic-based composite material in a fiber surface. Specifically, it relates to a silicon carbide fiber which has a slope constitution in which the existent ratio of boron slopingly increases towards the surface of the fiber and the boron nitride layer has a layered structure which is parallel to the surface of the fiber.

### Background of the Invention

Since ceramic-based composite materials obtainable by reinforcing ceramics with inorganic fibers have high toughness and high strength and are excellent in heat resistance, developments thereof are vigorously made (see eg EP-A-1 391 442). A SiC/SiC composite material obtainable by reinforcing a silicon carbide matrix with a silicon carbide fiber is one of the most promising materials in a high-temperature use.

It is widely known that characteristics of an interface between the fiber and the matrix are very important for controlling the mechanical properties of the SiC/SiC composite material. That is, a difference in the interfacial bonding strength of the fiber and the matrix exerts a great influence on the mechanical strength of the composite material. When the interfacial bonding of the fiber and the matrix is too large, cracks generated in the matrix easily spread into the fiber so that the material shows very brittle breakdown behavior and its strength and toughness become very low. On when the interfacial bonding of the fiber and the matrix is appropriate, bridging or pull-out of the fiber occurs at the destruction of the material so that favorable strength and toughness are shown. For controlling the interfacial bonding strength of the fiber and the matrix, generally, an interface layer is formed on a fiber surface.

As an interface material, there are used carbon, boron nitride and the like. Of these interface materials, boron nitride is the most excellent in heat resistance and receives attention.

When boron nitride is used as an interface material for a ceramic-based composite material, it is required to form a boron nitride layer on a reinforcing fiber surface in some way.

Generally, for example, as shown in Ceramic Engineering Science Proceedings 16 (4) (1995), p 405 -416, the formation of boron nitride layer is carried out by using boron trichloride or boron trifluoride and ammonia as a raw material gas according to a chemical vapor deposition method (CVD method). However, the CVD method requires a special CVD device and the raw material gas is expensive and dangerous, so that it is a very high-cost process.

Further, for example, as shown in Journal of American Ceramic Society vol.77 No.4, p 1,011 -1,016, there has been used a method in which a fiber is immersed in a boric acid solution and then the fiber is sintered in an ammonia atmosphere to form a boron nitride layer on a fiber surface . However, in the solution immersion method like above, it is very difficult to form a boron nitride layer having a uniform thickness on the surface of each fiber of a fiber bundle. In most cases, there is caused bridging in which fibers are bonded to each other with boron nitride layers.

Further, M.D.Sacks et al. disclose a method for forming a boron nitride layer on a silicon carbide fiber surface in US Patent No. 6, 040, 008 and Ceramic Engineering and Science Proceedings Volume 21, Issue 4(2,000), p 275 - 281. In this method, a boron compound is added to a high molecular-weight polycarbosilane having a weight average molecular weight of 7,000 to 16,000, the mixture is dry-spun to form a spun fiber, the spun fiber is sintered in argon gas to introduce boron into a silicone carbide fiber homogeneously, and the resultant fiber is again sintered in a nitrogen-containing atmosphere, thereby forming a boron nitride layer on a silicon carbide fiber surface. However, in the case of the above method, it is very difficult to make the boron homogeneously dispersed in the silicon carbide fiber move to the fiber surface by heat treatment. Therefore, for forming a boron nitride layer having a sufficient thickness as an interface layer on the fiber surface, it is indispensable to increase the amount of boron to be introduced into the silicon carbide fiber. However, the oxidation resistance of the fiber becomes worse as the boron amount in the silicon carbide fiber increases. Further, according to the above document, the silicon carbide layer formed by the above method is arranged in a direction perpendicular to a fiber axis direction so that the boron nitride layer having such a structure can not be expected to exert a big effect as an interface layer for a ceramic-based composite material.

### Summary of the Invention

It is an object of the present invention to provide a process for preparing a silicon carbide fiber having a boron nitride layer, which is useful as a reinforcing fiber for a ceramic-based composite material, in a fiber surface.

The silicon carbide fiber has a slope constitution in which boron increases towards a surface layer and a fiber structure in which a boron nitride layer has a layered structure which is parallel to the surface of the fiber.

According to the present invention, there is provided a process for the production of a silicon carbide fiber having a surface boron nitride layer, wherein (a) in a portion of the fiber the concentration of boron increases towards the surface of the fiber and (b) the orientation of the boron nitride layer is parallel to the surface of the fiber which process comprises:
(a) either (i) melt-spinning a modified polycarbosilane obtainable by modifying with an organic boron compound a polycarbosilane having a number average molecular weight of from 200 to 7,000 and a main chain structure represented by the formula, 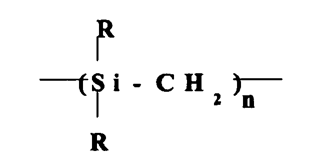 at a temperature of 280°C or lower in an inert gas, in which R is a hydrogen atom, a C₁ to C₄ alkyl group, a phenyl group or a metal atom selected from Ti, Zr, Hf, Al, V, Mg and Y, which metal atom is bonded to the Si atom either directly or via an oxygen atom wherein the organic boron compound is a compound of the formula B(OR')n or the formula BR"m, in which R' is an alkyl group having 1 to 20 carbon atoms or a phenyl group, R" is acetyl acetonate, and each of m and n is an integer of more than 1, or (ii) melt-spinning a mixture of said modified polycarbosilane and said organic boron compound, to obtain a spun fiber;
(b) infusibilizing the spun fiber; and
(c) sintering the infusible fiber in a nitrogen-containing atmosphere at a temperature of 500 to 2000°C.

The invention further provides a process for preparing a ceramic material, which process comprises:
(a) preparing a silicon carbon fiber by a process according to any one of claims 1 to 6; and
(b) incorporating the silicon fiber into a ceramic material.

### Brief Description of Drawings

Fig.1 is a diagram showing the result of analysis of a boron concentration change from the surface of a precursor fiber to the inside thereof by Auger electron spectroscopy in Example 1.

Fig.2 is an illustration which schematically shows steps of the generation of a silicon carbide fiber having a boron nitride layer in a fiber surface, provided by the present invention.

### Detailed Description of the Invention

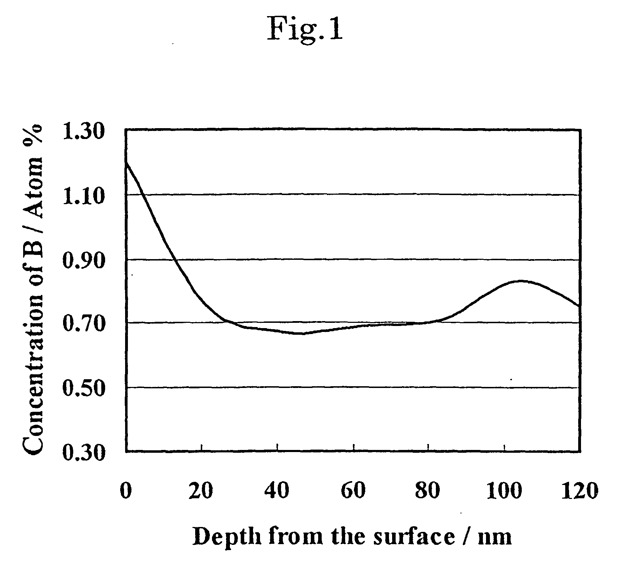

The present invention relates to a process for preparing a silicon carbide fiber which has, in a fiber surface, a boron nitride layer useful as a reinforcing fiber for a ceramic-based composite material. The silicon carbide fiber of the present invention has a central portion (silicon carbide phase) covering mechanical properties and a boron nitride phase covering interface function in a surface layer and near the surface layer, further has a slope constitution in which boron increases towards the surface layer and has a fiber structure in which the boron nitride layer has a layered structure which is parallel to the fiber surface. Accordingly, there can be obtained a fiber having an interface function excellent in oxidation resistance. In the present invention, unlike the above method of Sack et al., a surface layer having a high boron concentration is formed at a precursor step, as shown in Fig.1, and it is reacted with a nitrogen-containing substance (e.g., nitrogen or ammonia) which is homogeneously diffused from the fiber surface. It is estimated that a boron nitride layered structure, which is parallel to the fiber surface, is formed as a result.

In the silicon carbide fiber having a boron nitride layer in the fiber surface, the silicon carbide phase may be amorphous or crystalline.

That is, the present invention concerns the preparation of a silicon carbide fiber formed of a composite phase comprising a silicon carbide layer (first phase) and a boron nitride phase (second phase), which fiber is characterized in that the existent ratio of boron slopingly increases towards the surface layer of the fiber.

The silicon carbide phase (first phase) forms an inside phase of the fiber obtained by the present invention and it plays an important role in covering mechanical properties. The existent ratio of the first phase based on the fiber as a whole is preferably 97 % by weight or higher. It is preferred to control the existent ratio of the first phase in the range of from 98 to 99 % by weight for exerting the intended functions of the second phase sufficiently and exerting high mechanical properties concurrently.

On the other hand, the boron nitride which constitutes the second phase plays an important role in exerting the intended function in the present invention. It may be amorphous or crystalline. Further, the second phase may include boron carbide. The existent ratio of the second phase which constitutes a surface layer portion of the fiber is preferably 0.5 to 3.5 % by weight (boron content 0.2 to 1.5 % by weight). It is preferred to control the existent ratio of the second phase in the range of from 0.7 to 2.0 % by weight (boron content 0.3 to 0.9 % by weight) for exerting its functions sufficiently and exerting high strength concurrently.

The existent ratio of boron in the second phase slopingly increases towards the fiber surface. The thickness of a region where the slope in the constitution is apparently recognized is preferably controlled in the range of 5 to 500 nm. The above "existent ratio" of the second phase refers to a ratio contained in the fiber as a whole.

The process for the production of the silicon carbide fiber having boron nitride in a fiber surface, provided by the present invention, will be explained hereinafter.

In the present invention, mainly, a modified polycarbosilane obtainable by modifying a polycarbosilane which has a main chain structure represented by the formula, 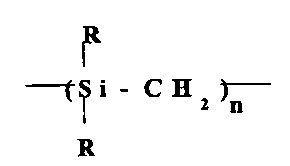 (in which R is a hydrogen atom, a C₁₋₄alkyl group or a phenyl group) and a number average molecular weight of 200 to 7,000, with an organic boron compound is melt-spun or a mixture of the modified polycarbosilane and an organic boron compound is melt-spun, to obtain a spun fiber; the spun fiber is infusibilized; and then the infusible fiber is sintered in a nitrogen-containing atmosphere, whereby the silicon carbide fiber having boron nitride in a fiber surface can be produced.

The first step of the present invention's process is a step of producing a modified polycarbosilane having a number average molecular weight of 1,000 to 50,000 as a starting material used for producing the silicon carbide fiber having boron nitride in a fiber surface. The fundamental production process of the above modified polycarbosilane is remarkably similar to the production process of JP-A-56-74126. However, in the present invention, it is required to carefully control the bonding state of a functional group described in JP-A-56-74126. The general outlines thereof will be explained hereinafter.

The modified polycarbosilane as a starting material is derived mainly from a polycarbosilane having a main chain structure represented by the formula, 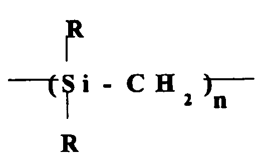 (in which R is a hydrogen atom, a C₁₋₄alkyl group or a phenyl group) and a number average molecular weight of 200 to 7,000, and an organic boron compound having a basic structure of the formula B(OR')n or the formula BR"m (in which R' is an alkyl group having 1 to 20 carbon atoms or a phenyl group, R" is acetyl acetonate, and each of m and n is an integer of more than 1).

In the present invention, there may be used, as the above polycarbosilane, a polycarbosilane in which at least parts of silicon atoms are bonded to metal elements such as Ti, Zr, Hf, Al, V, Mg or Y directly or through oxygen atoms.

For producing the fiber having a slope constitution, provided by the present invention, it is required to select slow reaction conditions under which only part of the organic boron compound forms a bond with the polycarbosilane. For the above purpose, it is required to carry out the reaction at a temperature of 280°C or lower, preferably 250°C or lower, in an inert gas. Under the above reaction conditions, even when the above organic boron compound is reacted with the polycarbosilane, it bonds as a monofunctional polymer (i.e., a pendant-like bonding) and no large increase in molecular

When two or more functional groups are bonded, the polycarbosilane forms a cross-linking structure and a noticeable increase in molecular weight is observed. In this case, sudden heat generation and an increase in melt viscosity occur during the reaction. On the other hand, when only one functional group is reacted as described above and an unreacted organic boron compound remains, conversely, a decrease in melt viscosity is observed.

In the present invention, it is preferred to select conditions under which an unreacted organic boron compound is intentionally left. The present invention uses mainly, as a starting material, a material in which the above modified polycarbosilane coexists with an organic boron compound which is in an unreacted state or an organic boron compound which is dimer, trimer or so. However, the modified polycarbosilane alone can be similarly used as a starting material when the modified polycarbosilane contains a modified polycarbosilane component having an extremely low molecular weight.

In the second step of the present invention' s process, the modified polycarbosilane obtained in the first step or a mixture of the modified polycarbosilane and a low molecular-weight organic boron compound is molten to form a spinning solution, optionally the spinning solution is filtered to remove substances which are to be detriment at the time of spinning such as a microgel or impurities, and the spinning solution is spun with a generally used synthetic fiber-spinning machine. While the temperature of the spinning solution at the spinning time differs depending upon the softening temperature of the modified polycarbosilane as raw materials, it is advantageous to select a temperature in the range of from 50 to 200°C. The above spinning machine may be equipped with a humidifying and heating cylinder in a nozzle bottom portion as required. The diameter of a fiber is adjusted by changing the amount of ejection from a nozzle and the take-up speed of a high-speed take-up unit attached to a bottom portion of the spinning machine.

In addition to the above-described melt spinning, the second step of the present invention's process can give an intended fiber by dissolving the modified polycarbosilane obtained in the first step or a mixture of the modified polycar bosilane and low mole cular-weight organic boron compound in, for example, benzene, toluene, xylene or a solvent which can dissolve the modified polycarbosilane and the low molecular-weight organic boron compound, to form a spinning solution, optionally filtering the spinning solution to remove substances which are to be detriment at the time of spinning such as a macrogel or impurities, and spinning the spinning solution with a generally used synthetic fiber-spinning machine by a dry spinning method while controlling the take-up speed.

In these spinning steps, a spinning cylinder may be attached to the spinning machine as required. An atmosphere in the cylinder is changed to a mix atmosphere mixed with at least one gas selected from the above solvents or replaced with an atmosphere of air, an inert gas, heated air, a heated inert gas, steam, an ammonia gas, a hydrocarbon gas or an organosilicon compound gas, whereby solidification of a fiber in the spinning cylinder can be controlled.

Next, in the third step of the present invention's process, the above spun fiber is preliminarily heated in an oxidizing atmosphere under the action of tension or no tension, to infusibilize the spun fiber. The purpose of this step is to prevent the fiber from melting in the following sintering step and to prevent adjacent fibers from bonding to each other. The temperature for the treatment and the time for the treatment differ depending upon the constitution. Although not specially limited, generally, the treatment is carried out in the range of 50 to 400°C for several hours to 30 hours. The above oxidizing atmosphere may contain moisture, nitrogen oxide, ozone, etc., which increase the oxidation strength of the spun fiber, and an oxygen partial pressure may be changed intentionally.

In some cases, the softening temperature of the spun fiber becomes less than 50°C according to the ratio of substances having a low molecular weight contained in the raw materials. In these cases, a treatment for promoting the oxidation of a fiber surface is previously carried out at a temperature lower than the above treatment temperature in some cases. In the third step and the second step, there is advanced bleedout of the low-molecular weight compound, contained in the raw materials, to the fiber surface. It is considered that the ground of the intended slope constitution is accordingly formed.

In the next fourth step of the present invention's process, the above infusible fiber is sintered under tension or no tension at a temperature in the range of 500 to 2,000°C in a nitrogen-containing atmosphere, to obtain the intended silicon carbide fiber formed of a composite phase comprising a silicon carbide phase (first phase) and a boron nitride phase (second phase), in which the existent ratio of boron slopingly increases towards the surface layer.

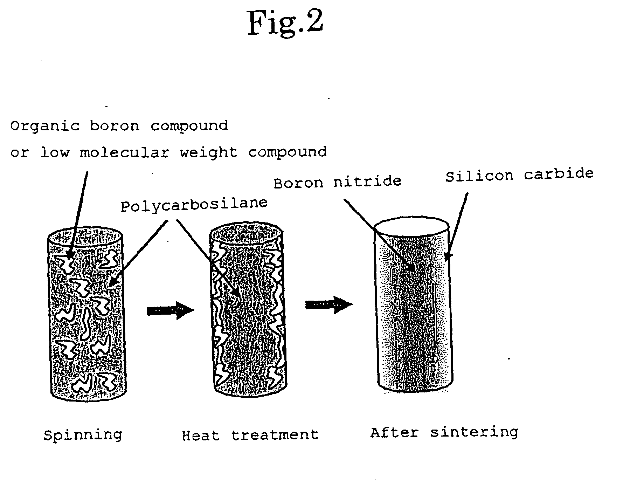

Fig.2 schematically shows steps of the generation of the silicon carbide fiber having the intended slope constitution, provided by the present invention.

### Examples

The present invention will be explained with reference to Examples hereinafter.

### Referential Example 1

2.5 liters of anhydrous toluene and 400 g of metallic sodium were placed in a three-necked flask having a volume of 5 liters, the mixture was heated to the boiling point of toluene under a flow of nitrogen gas, and 1 liter of dimethyldichlorosilane was dropwise added over 1 hour. After the completion of the addition, the mixture was refluxed under heat for 10 hours to obtain a precipitate. The precipitate was recovered by filtration, and washed with methanol and then with water to give 420 g of a white powder polydimethylsilane.

250 g of the polydimethylsilane was placed in a three-necked flask equipped with a water-cooling refluxing device, and allowed to react under heat at 420°C for 30 hours under a nitrogen flow, to obtain a polycarbosilane having a number average molecular weight of 1,200.

### Example 1

100 g of toluene and 100 g of tributyl borate were added to 100 g of polycarbosilane synthesized according to Referential Example 1, the mixture was preliminarily heated at 100°C for 1 hour, then the mixture was slowly temperature-increased up to 150°C to distill the toluene off, the resultant mixture was allowed to react at the above temperature for 5 hours, and then the reaction mixture was further temperature-increased up to 250°C and allowed to react at this temperature for 5 hours, to obtain a modified polycarbosilane. 10 g of tributyl borate was added to the modified polycarbosilane for the purpose of intentionally making a low-molecular weight organic boron compound coexist, to obtain a mixture of the modified polycarbosilane and the low-molecular weight organic boron compound.

The mixture of the modified polycarbosilane and the low-molecular weight organic boron compound was dissolved in toluene, the resultant solution was placed in a spinning machine made of glass, it was temperature-increased in the spinning machine in which nitrogen had been sufficiently substituted to distill the toluene off and the resultant material was melt-spun at 180°C.

The spun fiber was stepwise heated up to 150°C in air to form an infusible fiber, and the infusible fiber was sintered in nitrogen at 1,500°C for 1 hour, to obtain a silicon carbide fiber having a boron nitride layer in a fiber surface.

As a result of TEM observation of the obtained silicon carbide fiber (average diameter: 10µm), it was confirmed that the boron nitride layer having a layered structure which was parallel to the fiber surface was formed in the fiber surface. The inside silicon carbide phase was amorphous. Further, as a result of elemental analysis, the boron content in the fiber was 0.5 % by weight. Further, the fiber was examined for the distribution state of constitutive atoms by Auger. The molar ratio of B/Si was 0.85 in the region of from the outermost surface to a depth of 50 nm, the molar ratio of B/Si was 0.20 in the region of from a depth of 100 nm to 200 nm below the outermost surface, and the molar ratio of B/Si in the central portion was 0. Accordingly, it was confirmed that the fiber had a slope constitution in which boron increased towards the surface. The fiber had a tensile strength of 3.0 GPa. The fiber was heat-treated in air at 1,000 °C for 100 hours and then it was measured for a tensile strength at room temperature. In this case, the fiber after the heat treatment retained at least 90 % of the tensile strength shown before the heat treatment. Further, the fiber was molded into a three-dimensional fabric having a fiber ratio of X:Y:Z = 1:1:0.1, the fabric was immersed in polytitanocarbosilane (50 % xylene solution), the fabric was dried and then the dried fabric was sintered in nitrogen at 1,200 °C for 1 hour. In order to densify the above material, the above immersion-drying-sintering were repeated eight times, to obtain a SiC/SiC composite material. The SiC/SiC composite material was measured for a three-point bending strength at room temperature. The three-point bending strength was 450 MPa. According to fracture observation, it was found that many fibers were pulled out.

### Example 2

10 g of aluminum acetylacetonate was added to a toluene solution in which 100 g of polycarbosilane synthesized according to Referential Example 1 was dissolved, and the mixture was allowed to react in a crosslinking reaction at 320°C under a nitrogen gas flow, to obtain a polyaluminocarbosilane having a number average molecular weight of 2,000.

100 g of toluene and 100 g of tributyl borate were added to 100 g of the obtained polyaluminocarbosilane, the mixture was preliminarily heated at 100°C for 1 hour, then the mixture was slowly temperature-increased up to 150°C to distill the toluene off, the resultant mixture was allowed to react at the above temperature for 5 hours, and then the reaction mixture was further temperature-increased up to 250°C and allowed to react at this temperature for 5 hours, to obtain a modified polycarbosilane. 10 g of tributyl borate was added to the modified polycarbosilane for the purpose of intentionally making a low-molecular weight organic boron compound coexist, to obtain a mixture of the modified polycarbosilane and the low-molecular weight organic boron compound.

The mixture of the modified polycarbosilane and the low-molecular weight organic boron compound was dissolved in toluene, the resultant solution was placed in a spinning machine made of glass, it was temperature-increased in the spinning machine in which nitrogen had been sufficiently substituted to distill the toluene off and the resultant material was melt-spun at 180°C.

The spun fiber was stepwise heated up to 150°C in air to form an infusible fiber, and the infusible fiber was sintered in nitrogen at 1,900°C for 1 hour, to obtain a silicon carbide fiber having a boron nitride layer in a fiber surface.

As a result of TEM observation of the obtained silicon carbide fiber (average diameter: 10µm), it was confirmed that boron nitride layers were formed in the fiber surface . The inside silicon carbide phase was crystalline. Further, as a result of elemental analysis, the boron content in the fiber was 0.5 % by weight. Further, the fiber was examined for the distribution state of constitutive atoms by Auger. The molar ratio of B/Si was 0.85 in the region of from the outermost surface to a depth of 50 nm, the molar ratio of B/Si was 0.16 in the region of from a depth of 100 nm to 200 nm below the outermost surface, and the molar ratio of B/Si in the central portion was 0. Accordingly, it was confirmed that the fiber had a slope constitution in which boron increased towards the surface. The fiber had a tensile strength of 2.8 GPa. The fiberwas heat-treated in air at 1,000 °C for 100 hours and then it was measured for a tensile strength at room temperature. In this case, the fiber after the heat treatment retained at least 90 % of the above strength shown before the heat treatment. Further, the fiber was molded into a three-dimensional fabric having a fiber ratio of X:Y:Z = 1:1:0.1, the fabric was immersed in polytitanocarbosilane (50 % xylene solution), the fabric was dried and then the dried fabric was sintered in nitrogen at 1,200 °C for 1 hour. In order to densify the above material, the above immersion-drying-sintering were repeated eight times, to obtain a SiC/SiC composite material. The SiC/SiC composite material was measured for a three-point bending strength at room temperature. The three-point bending strength was 400 MPa. According to fracture observation, it was found that many fibers were pulled out.

### Comparative Example 1

A silicon carbide fiber having a boron nitride layer in a fiber surface was synthesized according to the method described in US Patent No. 6,040,008. As a result of TEM observation of the obtained silicon carbide fiber (average diameter: 10µm), it was confirmed that boron nitride layers formed in the fiber surface were arranged in a direction perpendicular to a fiber axis direction. The inside silicon carbide phase was crystalline . Further, as a result of elemental analysis, the boron content in the fiber was 2 % by weight. Further, the fiber was examined for the distribution state of constitutive atoms by Auger. The molar ratio of B/Si was 0.85 in the region of from the outermost surface to a depth of 50 nm, the molar ratio of B/Si was 0.25 in the region of from a depth of 100 nm to 200 nm below the outermost surface, and the molar ratio of B/Si in the central portion was 0.1. The fiber had a slope constitution in which boron increased towards the surface, while the existence of boron was confirmed even in the inside of the fiber. The fiber had a tensile strength of 2.8 GPa. The fiber was heat-treated in air at 1,000 °C for 100 hours and then it was measured for a tensile strength at room temperature. In this case, the tensile strength of the fiber was decreased to 70 % or lower based on the tensile strength shown before the heat treatment. Further, the fiber was molded into a three-dimensional fabric having a fiber ratio of X:Y:Z = 1:1:0.1, the fabric was immersed in polytitanocarbosilane (50 % xylene solution) , the fabric was dried and then the dried fabric was sintered in nitrogen at 1,200 °C for 1 hour. In order to densify the above material, the above immersion-drying-sintering were repeated eight times, to obtain a SiC/SiC composite material. The SiC/SiC composite material was measured for a three-point bending strength at room temperature. The three-point bending strength was 100 MPa, and brittle breakdown behavior was observed. According to fracture observation, it was found that no fiber was pulled out.

In this specification, including the accompanying claims, each R in the formula 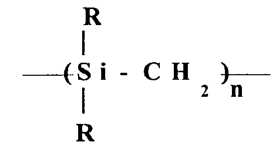 is the same or different and typically represents hydrogen, a C₁-C₄ alkyl group, a phenyl group or a metal atom selected from Ti, Zr, Hf, Al, V, Mg and Y, which metal atom is bonded to the Si atom either directly or via an oxygen atom.

## Claims

1. A process for the production of a silicon carbide fiber having a surface boron nitride layer, wherein (a) in a portion of the fiber the concentration of boron increases towards the surface of the fiber and (b) the orientation of the boron nitride layer is parallel to the surface of the fiber which process comprises:
(a) either (i) melt-spinning a modified polycarbosilane obtainable by modifying with an organic boron compound a polycarbosilane having a number average molecular weight of from 200 to 7,000 and a main chain structure represented by the formula, 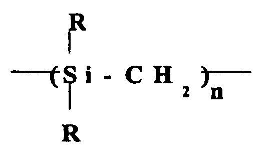 at a temperature of 280°C or lower in an inert gas, in which R is a hydrogen atom, a C₁ to C₄ alkyl group, a phenyl group or a metal atom selected from Ti, Zr, Hf, Al, V, Mg and Y, which metal atom is bonded to the Si atom either directly or via an oxygen atom wherein the organic boron compound is a compound of the formula B(OR')n or the formula BR"m, in which R' is an alkyl group having 1 to 20 carbon atoms or a phenyl group, R" is acetyl acetonate, and each of m and n is an integer of more than 1, or (ii) melt-spinning a mixture of said modified polycarbosilane and said organic boron compound, to obtain a spun fiber;
(b) infusibilizing the spun fiber; and
(c) sintering the infusible fiber in a nitrogen-containing atmosphere at a temperature of 500 to 2000°C.

2. A process according to claim 1, wherein the amount of boron in the fiber is from 0.2 to 1.5 % by weight, based on the fiber as a whole.

3. A process according to claim 1 or 2, wherein said fiber is formed of a composite phase comprising a silicon carbide phase and a boron nitride phase.

4. A process according to claim 3, wherein the amount of the silicon carbide phase is 97 % by weight or more based on the fiber as a whole.

5. A process according to any one of the preceding claims, wherein the portion of the fiber in which the concentration of boron increases extends from the surface of the fiber to from 5 to 500 nm below the surface of the fiber.

6. A process according to any one of claims 1 to 5, wherein the organic boron compound bonds to the polycarbosilane as a monofunctional polymer.

7. A process for preparing a ceramic material, which process comprises:
(a) preparing a silicon carbon fiber by a process according to any one of claims 1 to 6; and
(b) incorporating the silicon fiber into a ceramic material.

## Patentansprüche

1. Verfahren zur Herstellung einer Siliziumcarbidfaser mit einer Bornitrid-Oberflächenschicht, wobei (a) in einem Teil der Faser die Borkonzentration zur Faseroberfläche hin ansteigt und (b) die Ausrichtung der Bornitridschicht parallel zur Faseroberfläche erfolgt, wobei das Verfahren umfasst:
(a) entweder (i) das Schmelzspinnen eines modifizierten Polycarbosilans, das durch Modifizieren eines Polycarbosilans mit einem zahlendurchschnittlichen Molekulargewicht von 200 bis 7.000 und einer Hauptkettenstruktur, die durch die Formel 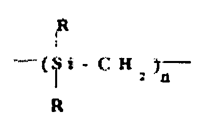 dargestellt ist, mit einer organischen Borverbindung bei einer Temperatur von 280°C oder darunter in einem Edelgas erhältlich ist, worin R ein Wasserstoffatom, eine C₁-C₄-Alkylgruppe, eine Phenylgruppe oder ein Metallatom ist, das aus Ti, Zr, Hf, Al, V, Mg und Y ausgewählt ist, wobei das Metallatom an das Si-Atom entweder direkt oder über ein Sauerstoffatom gebunden ist, wobei die organische Borverbindung eine Verbindung der Formel B(OR')n oder der Formel BR"m ist, worin R' eine Alkylgruppe mit 1 bis 20 Kohlenstoffatomen oder eine Phenylgruppe ist, R" Acetylacetonat ist und m und n jeweils eine ganze Zahl von über 1 ist, oder (ii) das Schmelzspinnen eines Gemischs aus dem modifizierten Polycarbosilan und der organischen Borverbindung, um eine gesponnene Faser zu erhalten;
(b) das Unschmelzbarmachen der gesponnenen Faser; und
(c) das Sintern der unschmelzbaren Faser in einer Stickstoff enthaltenden Atmosphäre bei einer Temperatur von 500 bis 2000°C.

2. Verfahren nach Anspruch 1, wobei die Bormenge in der Faser von 0,2 bis 1,5 Gew.-%, bezogen auf die Faser als Ganzes, beträgt.

3. Verfahren nach Anspruch 1 oder 2, wobei die Faser aus einer Verbundphase gebildet ist, die eine Siliziumcarbidphase und eine Bornitridphase umfasst.

4. Verfahren nach Anspruch 3, wobei die Siliziumcarbidphasenmenge 97 Gew.-% oder mehr, bezogen auf die Faser als Ganzes, beträgt.

5. Verfahren nach einem der vorhergehenden Ansprüche, wobei der Faserteil, bei dem die Borkonzentration ansteigt, sich von der Faseroberfläche aus bis 5 - 500 nm unter der Faseroberfläche erstreckt.

6. Verfahren nach einem der Ansprüche 1 bis 5, wobei die organische Borverbindung an das Polycarbosilan als monofunktionelles Polymer bindet.

7. Verfahren zum Herstellen eines Keramikmaterials, wobei das Verfahren umfasst:
(a) die Herstellung einer Siliziumcarbonfaser durch ein Verfahren nach einem der Ansprüche 1 bis 6; und
(b) die Einführung der Siliziumfaser in ein Keramikmaterial.

## Revendications

1. Procédé de production d'une fibre en carbure de silicium, dotée d'une couche superficielle de nitrure de bore, dans laquelle :
a) dans une partie de la fibre, la concentration de bore augmente en direction de la surface de la fibre,
b) et l'orientation de la couche de nitrure de bore est parallèle à la surface de la fibre,
lequel procédé comporte les étapes suivantes :
a)
i) soit filer à l'état fondu un polycarbosilane modifié, qu'on peut obtenir en modifiant au moyen d'un composé organique du bore, à une température inférieure ou égale à 280 °C et sous atmosphère de gaz inerte, un polycarbosilane qui présente une masse molaire moyenne en nombre de 200 à 7000 et une chaîne principale dont la structure est représentée par la formule suivante : 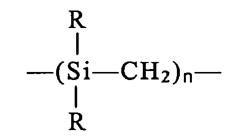 dans laquelle R représente un atome d'hydrogène, un groupe alkyle en C₁₋₄, un groupe phényle ou un atome d'un métal choisi parmi les titane, zirconium, hafnium, aluminium, vanadium, magnésium et yttrium, lequel atome de métal est lié à l'atome de silicium par une liaison directe ou par l'intermédiaire d'un atome d'oxygène, lequel composé organique du bore est un composé de formule
B(OR')ₙ ou BR"ₘ
dans lesquelles formules R' représente un groupe alkyle comportant 1 à 20 atomes de carbone ou un groupe phényle, R" représente un groupe acétylacétonate, et chacun des indices m et n est un nombre entier supérieur à 1,
ii) soit filer à l'état fondu un mélange dudit polycarbosilane modifié et dudit composé organique du bore,
de manière à obtenir une fibre filée ;
b) rendre infusible cette fibre filée ;
c) et fritter la fibre infusible sous une atmosphère contenant de l'azote, à une température de 500 à 2000 °C.

2. Procédé conforme à la revendication 1, dans lequel la quantité de bore contenue dans la fibre représente de 0,2 à 1,5 % du poids total de la fibre.

3. Procédé conforme à la revendication 1 ou 2, dans lequel ladite fibre est formée d'une phase composite comprenant une phase de carbure de silicium et une phase de nitrure de bore.

4. Procédé conforme à la revendication 3, dans lequel la quantité de phase de carbure de silicium représente au moins 97 % du poids total de la fibre.

5. Procédé conforme à l'une des revendications précédentes, dans lequel la partie de la fibre dans laquelle la concentration de bore augmente s'étend depuis la surface de la fibre jusqu'à un niveau situé à une distance de 5 à 500 nm au-dessous de la surface de la fibre.

6. Procédé conforme à l'une des revendications 1 à 5, dans lequel le composé organique du bore se lie au polycarbosilane à la manière d'un polymère monofonctionnel.

7. Procédé de préparation d'un matériau céramique, lequel procédé comporte les étapes suivantes :
a) préparer une fibre de carbure de silicium, en suivant un procédé conforme à l'une des revendications 1 à 6 ;
b) et incorporer cette fibre de carbure de silicium dans un matériau céramique.
